# EUROPEAN PATENT APPLICATION

(11) **EP 4 803 880 A1**
(43) Date of publication of application: **09.09.2026**
(21) Application number: 26159414.7
(22) Date of filing: 18.02.2026
(51) Int. Cl.: G01N 1/28, G01B 5/00, G01B 5/28

(54) **A DEVICE FOR MONITORING AN ENGINE SURFACE, AND A METHOD FOR MONITORING AN ENGINE SURFACE**

(30) Priority: 06.03.2025 US 202563767819 P; 02.02.2026 US 202619467098
(71) Applicant: Cummins Inc., Columbus, IN 47201 (US)
(72) Inventor: DEBUSK, Jacob, Colombus, 47203 (US); WANG, Chin, Greenwood, 46143 (US)
(74) Representative: Cleveland Scott York

(57) **Abstract**

A device for monitoring an engine surface includes a fixture body defining a breather aperture. The fixture body includes a first face engageable with a surface of an engine cylinder bore. The first face defines a recess. The fixture body also includes a first end including a lip that engages with a cylinder block. The first end defines a first end aperture in fluid communication with the recess. The device also includes at least one biasing member coupled to the fixture body and configured to exert a force on the fixture body causing the first face of the fixture body to contact the surface of the cylinder bore.

## Description

### CROSS-REFERENCE TO RELATED APPLICATIONS

The present application claims priority to United States Provisional Patent Application No. 63/767,819, filed March 6, 2025 and the contents of which are incorporated herein by reference.

### TECHNICAL BACKGROUND

The present application relates generally to a kit for monitoring an engine surface.

### BACKGROUND

Internal combustion engines include pistons that move within engine cylinder bores. Oil flows between an outer surface of each piston and the engine cylinder bore to facilitate the movement of the piston within the cylinder. A surface of the cylinder bore has a honing pattern.

### SUMMARY

According to one embodiment, a device for monitoring an engine surface. The device includes a fixture body defining a breather aperture. The fixture body includes a first face engageable with a surface of an engine cylinder bore. The first face defines a recess. The fixture body also includes a first end including a lip that engages with a cylinder block. The first end defines a first end aperture in fluid communication with the recess. The device also includes a biasing member coupled to the fixture body and configured to exert a force on the fixture body causing the first face of the fixture body to contact the surface of the cylinder bore.

According to another embodiment, a kit for analyzing a cylinder bore surface comprises a first fixture body, a second fixture body, and at least one biasing member. Each of the first fixture body and the second fixture body defines a breather aperture. Each of the first fixture body and the second fixture body comprises a first face engageable with a surface of an engine cylinder bore, the first face defining a recess, and a first end comprising a lip that engages with a cylinder block, the first end defining a first end aperture in fluid communication with the recess. The least one biasing member extends between the first fixture body and the second fixture body. Each of the at least one biasing member is configured to exert a force on each of the first fixture body and the second fixture body, causing the first face of the first fixture body and the first face of the second fixture body to contact a surface of a cylinder bore when the kit is positioned within the cylinder bore.

According to still another embodiment, a method of monitoring an engine surface comprises fixing a device to an engine cylinder bore such that a first face of the device is in contact with a surface of an engine cylinder bore, the first face defining a recess. The method further comprises providing a replication material to the recess such that the replication material contacts the surface of the engine cylinder bore, the replication material configured to cure after an amount of time has elapsed. The method further comprises removing the device including the cured replication material from the engine cylinder bore and analyzing the cured replication material.

### BRIEF DESCRIPTION OF THE DRAWINGS

The disclosure will become more fully understood from the following detailed description, taken in conjunction with the accompanying Figures, wherein like reference numerals refer to like elements unless otherwise indicated, in which:
FIG. 1 is a perspective view of a device for monitoring an engine surface according to one embodiment;
FIG. 2 is another perspective view of the device according to the embodiment of FIG. 1;
FIG. 3 is a front view of a portion of the device of according to the embodiment of FIG. 1;
FIG. 4 is a front view of a device for monitoring an engine surface according to another embodiment;
FIG. 5 is a cross-sectional view of the device according to the embodiment of FIG. 4;
FIG. 6 is a front perspective view of a device for monitoring an engine surface according to yet another embodiment;
FIG. 7 is a top perspective view of a device for monitoring an engine surface according to yet another embodiment;
FIG. 8 is another perspective view of the device according to the embodiment of FIG. 7; and
FIG. 9 is a flowchart illustrating a method of monitoring an engine surface according to one embodiment.

It will be recognized that the Figures are schematic representations for purposes of illustration. The Figures are provided for the purpose of illustrating one or more implementations with the explicit understanding that the Figures will not be used to limit the scope or the meaning of the claims.

### DETAILED DESCRIPTION

Following below are more detailed descriptions of various concepts related to, and implementations of, methods, and apparatuses, of an oil ring assembly for an internal combustion engine. The various concepts introduced above and discussed in greater detail below may be implemented in any of a number of ways, as the described concepts are not limited to any particular manner of implementation. Examples of specific implementations and applications are provided primarily for illustrative purposes.

Internal combustion engines (e.g., hydrogen engines, etc.) utilize lubricant, such as oil, to facilitate repeated movement of pistons within cylinder bores of a cylinder block. During manufacturing of the cylinder block, the engine cylinder bores are machined to provide a texturized pattern or honing pattern on the surface of the engine cylinder bore. The honing pattern facilitates creating a seal between an oil ring on a piston head and traps amounts of oil in the crevices of the pattern. The quality of the honing pattern affects the lifespan of the oil ring and the engine output. To assess the honing quality, a user must analyze the surface of the engine cylinder bore via tools such as a scanning electron microscope which typically requires disassembling or taking cross-sections of the engine block rendering it unusable.

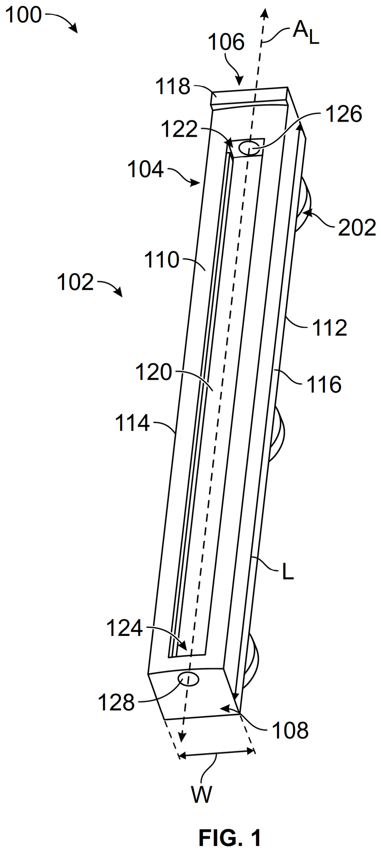

Figure 1 depicts a portion of a kit for monitoring an engine surface. In some embodiments, portions, or pieces, of the kit may be used alone for monitoring the engine surface as described in greater detail below.

Implementations herein relate to a device 102 for monitoring an engine surface. The device 102 includes a fixture body 104 defining a breather aperture 128. The fixture body 104 includes a first face 110 engageable with a surface (e.g., the engine surface, etc.) of an engine cylinder bore. The first face 110 defines a recess 120. The fixture body 104 also includes a first end 106 including a lip 118 that engages with a cylinder block. The first end 106 defines a first end aperture 126 in fluid communication with the recess 120. The device 102 also includes at least one biasing member 614 coupled to the fixture body 104 and configured to exert a force on the fixture body 104 causing the first face 110 of the fixture body 104 to contact the surface of the engine cylinder bore.

The kit includes a device 102. The device 102 is a configured to be positioned or placed within a cylinder bore of an engine block. The device 102 includes the fixture body 104. The outermost edges of the fixture body 104 define a rectangular cuboid shape, although other shapes are possible. The fixture body 104 defines a fixture body length L in a direction substantially parallel to a longitudinal axis A_{L} and a fixture body width *W* in a direction substantially perpendicular to the longitudinal axis A_{L}. The fixture body length L is greater than, or longer than, the fixture body width *W.* For example, the length *L* of the fixture body 104 is a magnitude (e.g., four time, five times, etc.) greater than the width W to facilitate that the fixture body 104 extending along a greater length, or vertical distance, of a cylinder bore. In other embodiments, the fixture body width *W* is greater than or longer than the fixture body length *L.* The fixture body 104 is comprised of a plastic or metal material such that the fixture body 104 is flexible or deformable.

The fixture body 104 includes the first end 106 (e.g., a top end, etc.), a second end 108 (e.g., a bottom end, etc. ), and the first face 110. The second end 108 is positioned opposite the first end 106. The first face 110 extends between the first end 106 and the second end 108.

The fixture body 104 also includes a second face 112, a first side 114, and a second side 116. The second face 112 is positioned opposite the first face 110. Each of the first side 114 and the second side 116 extend between the first face 110 and the second face 112. According to this embodiment, the first side 114 and the second side 116 extend substantially perpendicular to the second face 112.

The first end 106 includes the lip 118. The lip 118 extends or protrudes outward from the first end 106 away from the first face 110. The lip 118 is configured to engage with an end of a cylinder block (e.g., a top end of the cylinder block, etc.) to facilitate positioning of the fixture body 104 within the engine cylinder bore. For example, the lip 118 contacts, or rests on, the top side or top face of the cylinder block or a top end or top edge of a liner of the cylinder block to facilitate keeping the fixture body 104 in a stationary position within the engine cylinder bore.

The first face 110 is configured to engage with a surface of an engine cylinder bore. For example, when the fixture body 104 is positioned with in the engine cylinder bore, the first face 110 is positioned in contact with the surface of the engine cylinder bore. As such, the first face 110 is shaped to complement the surface of the engine cylinder bore (e.g., the first face 110 has a radius of curvature that is complementary to the shape of the engine cylinder bore, etc.). For example, the first face 110 is curved or rounded (e.g., defines a first radius of curvature, etc.) such that the first face 110 fits flush against the surface of the engine cylinder bore.

The first face 110 also defines the recess 120. According to this embodiment, the recess 120 is rectangular in shape when viewed at a cross-section of the fixture body 104 at the first face 110. The recess 120 is configured to receive or house a substance, such as a replication material. For example, the recess 120 is configured to receive the replication material and facilitate contact of the replication material with the surface of the engine cylinder bore. More specifically, the recess 120 is configured to receive the replication material in a liquid form and is configured to store at least a portion of the replication material in the recess 120 while the replication material cures or transitions to a substantially solid material. The recess 120 includes a recess first end 122 positioned adjacent to, or near, the first end 106. The recess 120 also includes a recess second end 124 opposite the recess first end 122 and positioned adjacent to, or near, the second end 108.

The fixture body 104 defines the first end aperture 126. The first end aperture 126 extends from the first end 106 through a portion of the fixture body 104 to the recess first end 122. The first end aperture 126 is in fluid communication with the recess 120. For example, the first end aperture 126 is configured to receive a fluid (e.g., a replication material, etc.) at the first end 106 and provide the fluid to the recess 120.

The fixture body 104 also defines the breather aperture 128. The breather aperture 128 is in air receiving communication with the recess 120. For example, as the fluid (e.g., the replication material, etc.) is provided to the recess 120 (e.g., provided via the first end aperture 126, etc.), air within the recess 120 is pressed out of or released from the recess 120. As such, the recess 120 provides the air to the breather aperture 128 (e.g., the 122 is in air receiving communication with the recess 120, etc.), and the breather aperture 128 directs (e.g., facilitates moving, etc.) the received air from the recess 120 out of the fixture body 104.

The breather aperture 128 is also in fluid communication with (e.g., fluid receiving communication with, etc.) the recess 120. As previously described, the recess 120 is in fluid receiving communication with the first end aperture 126. The recess 120 holds or stores the fluid and provides an amount of fluid (e.g., an excess amount, etc.) to the breather aperture 128. For example, once the recess 120 is filled with the fluid such that there are no gaps or air pockets between the recess 120 and the surface of the engine cylinder bore, the recess 120 provides any additional fluid provided to the recess 120 (e.g., via the first end aperture 126) to the breather aperture 128. As such, a portion of the fluid provided to the recess 120 is provided to the breather aperture 128, and the breather aperture 128 directs the portion of the fluid out of the fixture body 104.

According to this embodiment, the breather aperture 128 is defined through the recess second end 124 of the recess 120 through the fixture body 104 to the second end 108. As shown in FIG. 1, the first end aperture 126 and the breather aperture 128 are axially aligned. For example, the first end aperture 126 and the breather aperture 128 are centered along the longitudinal axis A_{L}. In another embodiment, the first end aperture 126 and the breather aperture 128 are aligned along another axis offset a distance away from the longitudinal axis A_{L}. In yet another embodiment, the first end aperture 126 and the breather aperture 128 are not axially aligned.

The breather aperture 128 also indicates when the recess 120 is full. For example, once the recess 120 is full, an amount (e.g., an excess amount, etc.) of replication material is provided to the breather aperture 128 and the breather aperture 128 directs the excess replication material out of the fixture body 104 such that a user can see the replication material flowing out of the fixture body 104 indicating that the recess 120 is full.

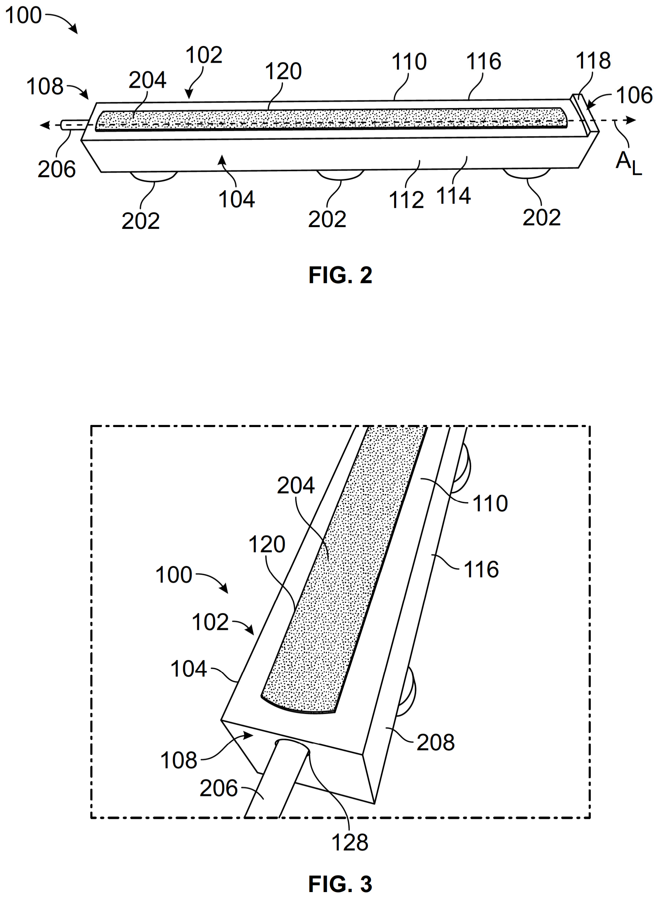

FIG. 2 is a side perspective view of the device 102. As shown in FIG. 2, the second face 112 includes at least one protrusion 202. According to this embodiment, the second face 112 includes three protrusions 202. In other embodiments, the second face 112 includes less protrusions (e.g., two protrusions, etc.) or more protrusions (e.g., four, five, etc.). The at least one protrusion 202 is integrally formed on the second face 112. In other embodiments, the at least one protrusion 202 is coupled to (e.g., secured to, fastened onto, etc.) the second face 112. The at least one protrusion 202 is configured to engage with a biasing mechanism, as described in more detail below.

As shown in FIG. 2, the recess 120 is filled with replication material and has been left to cure. The cured replication material 204 is cured substantially flush with the first side 114. Excess replication material 206 flows out of the device 102 via the breather aperture 128.

FIG. 3, illustrates a close-up view of a portion of the device 102 including cured replication material 204. The device 102 is pressed against the surface of the engine cylinder bore, such that when the provided replication material cures within the first side 114, the cured replication material 204 is substantially flush with or aligned with the first face 110. Since the replication material is provided as a liquid, or substantially fluid material, the replication material seeps into, or is provided into crevices or etching in the surface of the engine cylinder bore. The replication material then cures such that the crevices or etching, or the surface texture, of the surface of the engine cylinder bore is pressed into, or replicated by, the replication material. For example, the surface of the engine cylinder bore leaves an impression in the replication material.

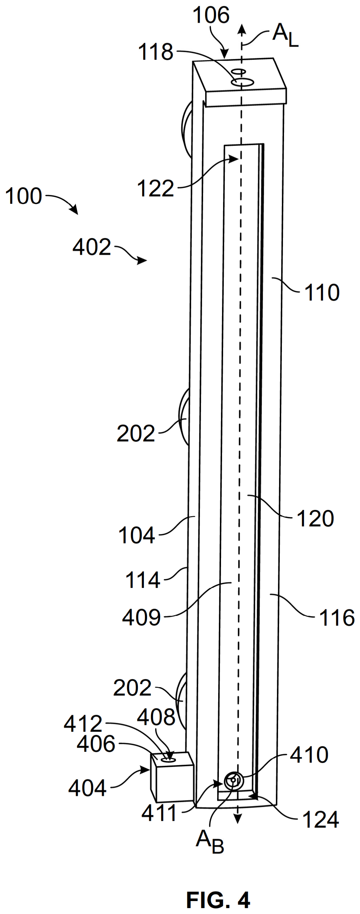

FIGS. 4-5 show a representation of the device 402 according to another embodiment. The device 402 includes a breather body 404. According to this embodiment, the breather body 404 is integrally formed with the fixture body 104. In other embodiments, the breather body 404 is coupled to the fixture body 104 (e.g., glued, fixed, etc.). As shown in FIG. 4, the breather body 404 extends away from the first side 114 of the fixture body 104. According to this embodiment, the breather body 404 is substantially cubic in shape, although other shapes are possible.

The breather body 404 has a first breather body surface 406. The first breather body surface 406 is adjacent to, or abuts, the first side 114 of the fixture body 104. The first breather body surface 406 extends across a plane substantially parallel to a plane defined by the first end 106.

The device 402 defines a breather channel 408. The breather channel 408 extends from the recess 120 into the device 402 in a direction towards the second face 112 and then extends through each of the fixture body 104 and the breather body 404. A wall 409 of the recess 120 that extends along a plane substantially parallel to the second face 112 (e.g., a back wall of the recess 120, a wall substantially perpendicular to the first side 114 and the second side 116, etc.), defines a breather inlet 410. The breather channel 408 includes a breather inlet portion 411 that extends in a direction along a breather axis A_{B} substantially perpendicular to the longitudinal axis A_{L}. The breather inlet portion 411 is in fluid receiving communication with the breather inlet 410 and the recess 120. The breather channel 408 is positioned in the device 402 in a portion between the recess 120 and the second face 112 (e.g., a space behind the recess 120, etc.).

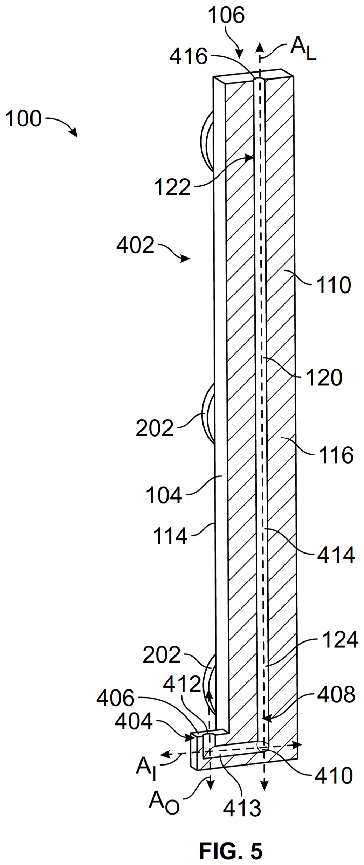

As shown in FIG. 5, the breather channel 408 also includes a first breather portion 413 that extends through the breather body 404. The first breather portion 413 is in air and fluid receiving communication with the breather inlet portion 411. The first breather portion 413 extends along a breather inlet axis A_{I}. The breather inlet axis A_{I} extends in a direction substantially perpendicular to each of the longitudinal axis A_{L} and the breather axis A_{B}.

The first breather body surface 406 of the breather body 404 defines a breather outlet 412. The breather outlet 412 is centered on a breather outlet axis A_{O}. The breather outlet axis A_{O} is substantially perpendicular to the breather inlet axis A_{I}. The breather outlet 412 is in air and fluid receiving communication with the first breather portion 413, and the first breather portion 413 is in air and fluid communication with the breather inlet portion 411. The breather channel 408 is in air and/or fluid receiving communication with the breather inlet 410. For example, air and/or fluid is provided to the breather channel 408 via the breather inlet 410, and the breather inlet portion 411 provides (e.g., directs, etc.) air and/or fluid through the first breather portion 413 to the breather outlet 412.

The breather channel 408 also includes a second breather portion 414. The second breather portion 414 is in air and fluid receiving communication with the breather inlet portion 411. The second breather portion 414 extends in a direction along or substantially parallel to, the longitudinal axis A_{L}.

The first end 106 of the fixture body 104 defines a second breather outlet 416. The second breather outlet 416 is centered on the longitudinal axis A_{L}. The longitudinal axis A_{L} is substantially parallel to the breather outlet axis A_{O}, and is substantially perpendicular to each of the breather inlet axis A_{I} and the breather axis A_{B}. The second breather portion 414 is in air and/or fluid receiving communication with the breather inlet 410. For example, air and/or fluid is provided to the breather inlet portion 411 via the breather inlet 410, and the breather inlet portion 411 provides (e.g., directs, etc.) air and/or fluid through the second breather portion 414 to the second breather outlet 416.

The breather channel 408 is in fluid receiving communication with the recess 120. For example, once the recess 120 is filled, the fluid, or replication material, is provided to the breather channel 408 or flows out of the recess 120 via the breather channel 408. The breather outlet 412 is in fluid receiving condition with the breather channel 408, such that the breather channel 408 provides the replication material to at least one of the breather outlet 412 or the second breather outlet 416 to exit the device 402. For example, each of the breather outlet 412 and the second breather outlet 416 facilitate the weeping of the replication material to indicate to the user that the recess 120 is full.

According to this embodiment, the breather channel 408 is curved or defines a bend. The breather inlet 410 of the breather channel 408 receives air and/or fluid along the breather inlet axis A_{I} and the breather channel 408 defines a bend (e.g., an 80-degree bend, a 90-degree bend, etc.) that directs flow towards the breather outlet 412 in a direction along the breather outlet axis A_{O}. As such, air and/or fluid exits the device 402 onto the first breather body surface 406 that defines a plane parallel to a plane defined by the first end 106. As such, when a user is looking down a longitudinal axis of the engine cylinder bore 608 (e.g., in a top-down view, etc.), the excess or additional replication material can be visualized or seen by the user, and the user can stop providing replication material to the recess 120 via the first end aperture 126 of the device 402.

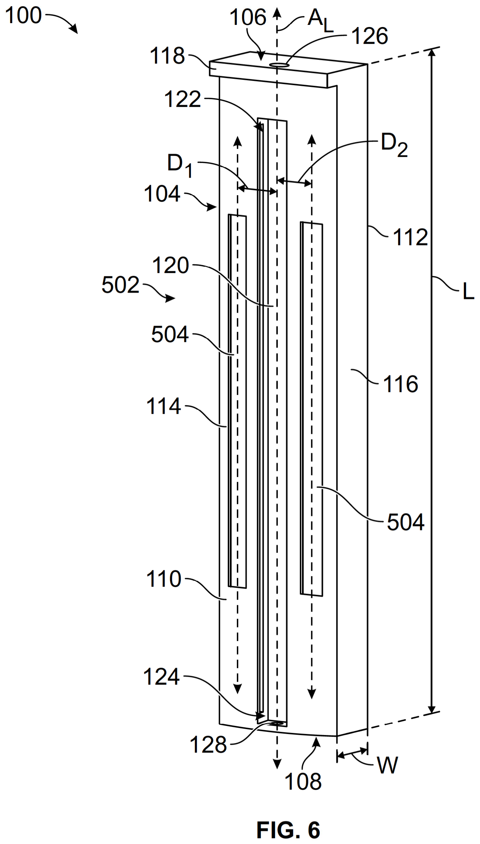

FIG. 6 is a representation of the device 502 according to another embodiment. According to this embodiment, the device 502 includes at least one biasing member positioned on the first face 110 of the device 502. In a particular implementation, the device 502 includes a plurality of biasing members including a first magnet 504 and a second magnet 506 (although other types of biasing members may be used). The first magnet 504 and the second magnet 506 are configured to exert a magnetic force between the fixture body 104 and a component of an engine, such as an engine cylinder bore.

The first magnet 504 is positioned adjacent to, or a distance D₁ laterally away from the recess 120 towards the first side 114 along a first axis A₁. The second magnet 506 is positioned adjacent to, or a distance D₂ laterally away from the recess 120 towards the second side 116 along a second axis A₂. The second axis A₂ extends substantially parallel to the first axis A₁. Each of the first magnet 504 and the second magnet 506 are substantially rectangular cuboid in shape (e.g., substantially rectangular when viewed along a cross-section of the first face 110, etc.), although other shapes are possible. In other embodiments, the device 502 can be magnetically coupled to other components of an engine system to determine surface properties (e.g., analyze and/or collect data, etc.) of another engine surface.

According to this embodiment, the second face 112 of the device 502 is substantially flat (e.g., does not include protrusions 202, etc.). In other embodiments, the second face 112 of the device 502 includes protrusions 202. For example, the device 502 can be biased towards the engine cylinder bore via each of the first magnet 504, the second magnet 506, and a spring.

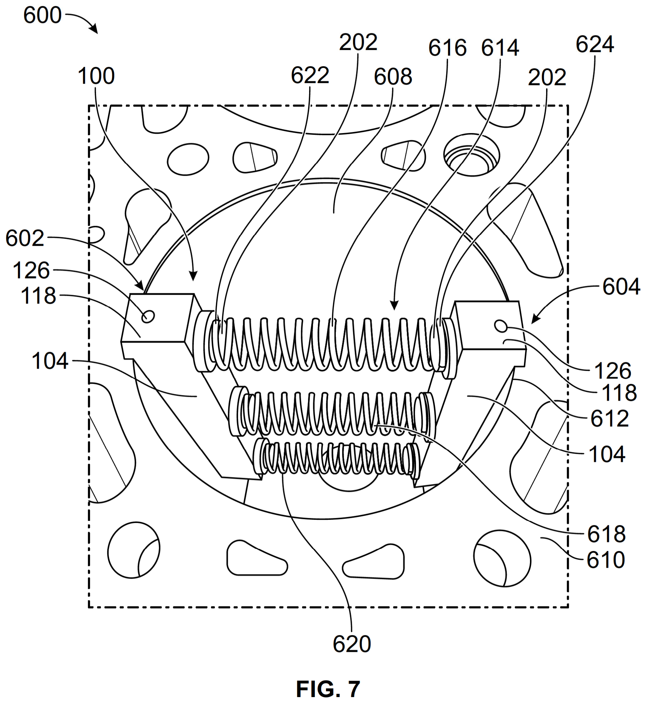

FIGS. 7-8 show an embodiment of a kit 600 including a first fixture body 602 (e.g., the fixture body 104 of the device 102, the device 402, the device 502, etc.) and a second fixture body 604 (e.g., the fixture body 104 of a second device 402, device 502, etc.). According to this embodiment, the first fixture body 602 and the second fixture body 604 are substantially similar to the device 102.

As shown in FIGS. 7-8, the first fixture body 602 and the second fixture body 604 are positioned in the engine cylinder bore 608 of a cylinder block 610. The lip 118 of each of the first fixture body 602 and second fixture body 604 are engaged with, or resting on, an edge 612 of the engine cylinder bore 608 (e.g., the lip 118 engages with the top of the cylinder block that abuts the engine cylinder bore, etc.). The first side 114 of each of the first fixture body 602 and the second fixture body 604 are in contact with or positioned against a surface of the engine cylinder bore 608.

The kit 600 also includes at least one biasing member 614. According to this embodiment, the kit 600 includes a plurality of biasing members 614 shown as a first spring 616, a second spring 618, and a third spring 620. In other embodiments, the kit 600 may include only one biasing member 614 or include more or less biasing members 614. In yet another embodiment, the at least one biasing member 614 is at least one extendable bar that can be locked into place between the first fixture body 602 and the second fixture body 604. As shown in FIGS. 7-8, the first fixture body 602 and the second fixture body 604 are positioned substantially diametrically opposite from each other. Each of the first spring 616, the second spring 618, and the third spring 620 extend between the first fixture body 602 and the second fixture body 604. Each of the first spring 616, the second spring 618, and the third spring 620 are configured to exert a force on each of the first fixture body 602 and the second fixture body 604 causing the first face 110 of each of the first fixture body 602 and the second fixture body 604 to contact a surface of the cylinder bore 608 (e.g., exert a spring force, exert a constant force, etc.).

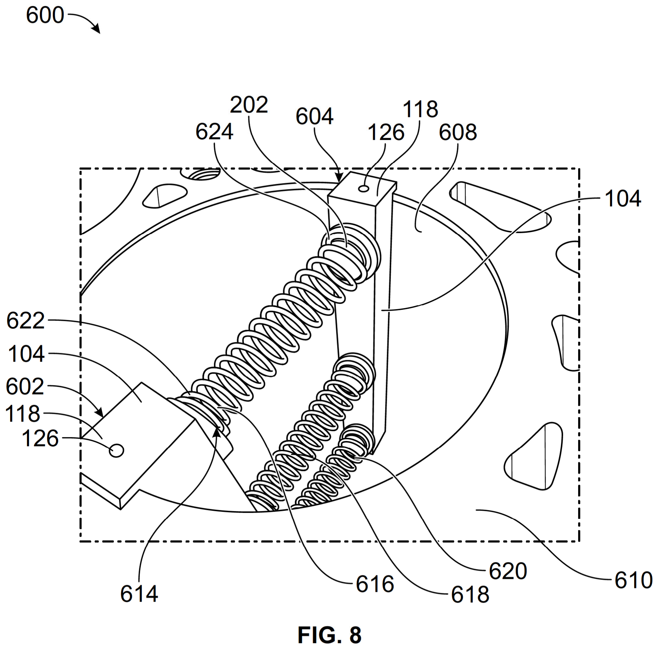

A first end 622 of each of the first spring 616, the second spring 618, and the third spring 620 engage with the protrusions 202 on the second face 112 of the first fixture body 602. A second end 624 of each of the first spring 616, the second spring 618, and the third spring 620 engage with the protrusions 202 on the second face 112 of the second fixture body 604. The protrusions 202 are configured to align and reduce movement of the first spring 616, the second spring 618, and the third spring 620 with respect to the first fixture body 602 and the second fixture body 604. As shown in FIGS. 7 and 8, the first end 622 and the second end 624 of each of the first spring 616, the second spring 618, and the third spring 620 surround at least a portion of the protrusions 202. For example, the protrusions 202 have a smaller circumference than a circumference defined by the first end 622 and the second end 624 of the first spring 616, the second spring 618, and the third spring 620 such that the first end 622 and the second end 624 are positioned around the protrusions 202 reducing slippage or movement of the spring 616, the second spring 618, and the third spring 620.

The biasing members 614, such as the first spring 616, the second spring 618, and the third spring 620, are selectively coupled to or engage with the first fixture body 602 and the second fixture body 604. As such, the first fixture body 602, the second fixture body 604 and the biasing members 614 are provided as the kit 600 uncoupled or as separate pieces.

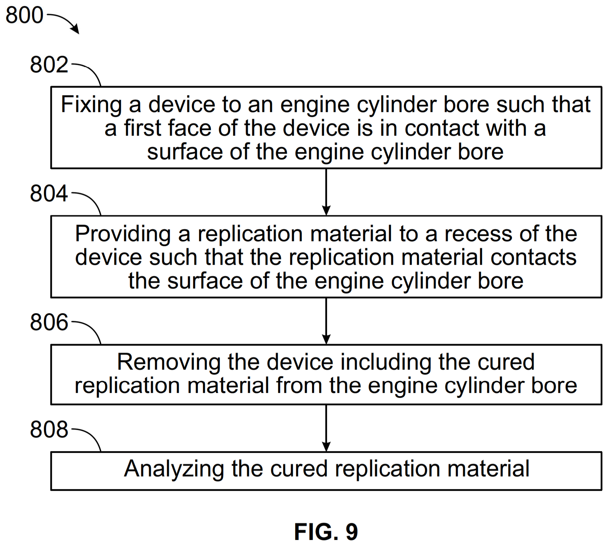

As shown in FIG. 9, a method 800 of monitoring an engine surface includes at 802 fixing the device 102 to the engine cylinder bore 608 such that the first face 110 of the device 102 is in contact with a surface of the engine cylinder bore 608. The first face 110 defines the recess 120. The method also includes at 804 providing a replication material to the recess 120 such that the replication material contacts the surface of the engine cylinder bore 608. The replication material is configured to cure after an amount of time has elapsed. The method also includes at 806 removing the device 102 including the cured replication material from the engine cylinder bore 608 and at 808 analyzing the cured replication material.

A user assembles the kit 600 for monitoring the surface of the engine cylinder bore 608 by positioning the first fixture body 602 on a first portion of the engine cylinder bore 608, positioning the second fixture body 604 on a second portion of the engine cylinder bore 608 (e.g., opposite the first fixture body 602, etc.), and positioning the at least one biasing member 614 (e.g., each of the first spring 616, the second spring 618, and the third spring 620, etc.) between each of the first fixture body 602 and the second fixture body 604.

For example, the user engages the first end 622 of one of the first spring 616, the second spring 618, and the third spring 620 with the protrusions 202 of the second face 112 of the first fixture body 602 and then compresses the first spring 616, the second spring 618, and the third spring 620 (e.g., making the length of the first spring 616, the second spring 618, and the third spring 620 less than a length in a resting position, etc.) to fit between the first fixture body 602 and the second fixture body 604 and releases the first spring 616, the second spring 618, and the third spring 620 such that the second end 624 engages with one of the protrusions 202 on the second face 112 of the second fixture body 604. As such, the at least one biasing member 614 biases each of the first fixture body 602 and the second fixture body 604 towards the surface of the engine cylinder bore 608 (e.g., facilitates hands-free engagement of the first fixture body 602 and the second fixture body 604 with the engine cylinder bore 608, etc.). According to this embodiment, the first spring 616, the second spring 618, and the third spring 620 bias or press each of the first fixture body 602 and the second fixture body 604 against the surface of the engine cylinder bore 608.

After each of the first fixture body 602, the second fixture body 604 and the at least one biasing member 614 are positioned within the engine cylinder bore 608, the user provides a fluid or substantially fluid material such as a replication material (e.g., a silicon rubber compound, etc.) to each of the first fixture body 602 and the second fixture body 604. The replication material is provided to the first end aperture 126 on the first end 106 of each of the first fixture body 602 and the second fixture body 604. The replication material is provided to the recess 120 via the first end aperture 126. Once the recess 120 is filled, the excess replication material flows through the breather aperture 128.

After an amount of time has elapsed (e.g., 30 seconds, a minute, etc.) the replication material begins to cure within each of the first fixture body 602 and the second fixture body 604. After a curing time has elapsed (e.g., 3 minutes, 4 minutes, 5 minutes, etc.), the replication material solidifies or cures to a substantially solid, yet flexible state and the user removes the at least one biasing member 614 (e.g., the first spring 616, the second spring 618, the third spring 620, etc.) from between the first fixture body 602 and the second fixture body 604 releasing the first fixture body 602 and the second fixture body 604 from engaging with the surface of the engine cylinder bore 608.

After the first fixture body 602 and the second fixture body 604 are removed from the engine cylinder bore 608, the user can visually analyze the honing quality of the surface of the engine cylinder bore 608 as replicated by or pressed into the replication material. In some embodiments, the user removes the cured replication material from the recess 120 of each of the first fixture body 602 and the second fixture body 604 to analyze and determine the quality of the honing of the surface of the engine cylinder bore 608 (see FIG. 3). For example, the user can determine a pit or protrusion or inconsistency in the honing pattern based on the replication material. In some embodiments, the first fixture body 602 and the second fixture body 604 are reusable such that they can be repeatedly filled with replication material to provide a plurality of samples or replications of surfaces of the engine system for determining characteristics of the surfaces.

After removing first fixture body 602 and the second fixture body 604 from the engine cylinder bore 608, and in some embodiments, removing the cured replication material from each of the first fixture body 602 and the second fixture body 604, the replication material is analyzed or viewed via various visualization devices. For example, the cured replication material is analyzed using a white light interferometer (WLI). By analyzing the surface of the cured replication material via WLI, the user determines a quality of the honing of the surface. For example, the WLI analysis provides data regarding the height of the protrusions and crevices of the honing. If the user determines that the height and/or depth of protrusions or crevices is too high or too low, the user determines that the stone or machinery used to create or carve the honing pattern is in need of service. For example, the user may inspect and/or replace machinery used to create the honing pattern in the engine cylinder bore 608 based the determined quality of the honing pattern determined from the replication material. In some embodiments, the cured replication material is viewed via a scanning electron microscope (SEM) or a magnifier.

The user can use the replication material to determine an overall status or quality of the engine cylinder bore 608 of the cylinder block 610. For example, the user can determine and/or monitor the quality of a plurality of cylinder blocks 610 as they are produced or manufactured. The user can determine the status of the surface quality of the engine cylinder bore 608 in real time while maintaining the structural integrity of the cylinder block 610 (e.g., a sampled cylinder block 610 maintains structural integrity to be used in an engine, etc.) and minimizing the need for traditional means of analysis that are time consuming and costly.

In other embodiments, the user can determine and monitor the quality of the engine cylinder bore 608 over a lifetime of the engine system. For example, the user can obtain or collect a replication of the surface of the engine cylinder bore 608 after the cylinder block 610 is produced and the user can obtain a second, and subsequent, replication of the surface of the engine cylinder bore 608 once the cylinder block 610 is in use. For example, the user obtains a second sample via the first fixture body 602 and the second fixture body 604 of the kit 600 when performing routine service on the engine (e.g., obtaining an oil sample, etc.). For example, the user samples the oil and provides/positions the device 102, device 402, or device 502 and the at least one biasing member 614 in the engine cylinder bore 608 and obtains a sample or replica of the surface of the engine cylinder bore 608 on the cured replication material. The user then analyzes each of the oil samples and the cured replication material, via, for example, a SEM device to determine the quality of the honing pattern. In response to the user determining the oil quality and quality of the surface of the engine cylinder bore 608, the user determines a health status of the power cylinder component and the oil. For example, the user can determine that the honing pattern is normal (e.g., appears as anticipated, defines the intended pattern, has minimal abnormalities, etc.) and indicates minimal wear or scuffing, and recommend that a follow-up sample be taken in a predetermined amount of time (e.g., years, after an additional 50,000 miles have been traveled, etc.).

While this specification contains many specific implementation details, these should not be construed as limitations on the scope of what may be claimed but rather as descriptions of features specific to implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a sub combination or variation of a sub combination.

As utilized herein, the terms "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the present disclosure.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the system shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the application, the scope being defined by the claims that follow. When the language "a portion" is used, the item can include a portion and/or the entire item unless specifically stated to the contrary.

Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

Additionally, the use of ranges of values (e.g., W to P, etc.) herein are inclusive of their maximum values and minimum values (e.g., W to P includes W and includes P, etc.), unless otherwise indicated. Furthermore, a range of values (e.g., W to P, etc.) does not necessarily require the inclusion of intermediate values within the range of values (e.g., W to P can include only W and P, etc.), unless otherwise indicated.

## Claims

1. A device for monitoring an engine surface, the device comprising:
a fixture body defining a breather aperture, the fixture body comprising:
a first face engageable with a surface of an engine cylinder bore, the first face defining a recess, and
a first end comprising a lip that engages with a cylinder block, the first end defining a first end aperture in fluid communication with the recess; and
at least one biasing member coupled to the fixture body and configured to exert a force on the fixture body causing the first face of the fixture body to contact the surface of the engine cylinder bore.

2. The device of claim 1, wherein the fixture body is a first fixture body engageable with a first portion of the surface of the engine cylinder bore, and the device further comprises a second fixture body defining a second breather aperture, the second fixture body comprising:
a second body first face engageable with a second portion of the surface of the engine cylinder bore, the second body first face defining a second recess, and
a second body first end comprising a second lip engageable with the cylinder block, the second body first end defining a second first end aperture in fluid communication with the second recess.

3. The device of claim 2, wherein the at least one biasing member extends between the first fixture body and the second fixture body, the at least one biasing member configured to exert a force on each of the first fixture body and the second fixture body, causing the first fixture body and the second fixture body to contact the surface of the engine cylinder bore.

4. The device of claim 3, wherein a second face of each of the first fixture body and the second fixture body comprises at least one protrusion, and wherein the at least one biasing member comprises at least one spring that extends between the first fixture body and the second fixture body, each of the at least one spring engaging one of the at least one protrusion on the second face of each of the first fixture body and the second fixture body.

5. The device of claim 1, wherein,
(a) the first end aperture and the breather aperture are aligned along a longitudinal axis of the fixture body, and/or
(b) the at least one biasing member comprises a magnet configured to exert a magnetic force between the fixture body and the engine cylinder bore, and/or
(c) the first face comprises a first radius of curvature that is complementary to a curvature of the engine cylinder bore, and/or
(d) the fixture body comprises a breather body extending from a side of the fixture body that abuts the first face, the breather body defining a breather channel in fluid communication with the breather aperture.

6. The device of claim 5, wherein the breather channel includes a breather inlet portion extending in a direction along a breather inlet axis substantially perpendicular to a longitudinal axis of the fixture body, the breather inlet portion in fluid receiving communication with (a) a breather inlet defined in a wall of the recess that extends along a plane substantially parallel to a second face of the fixture body, the second face positioned opposite the first face, and (b) the recess.

7. The device of claim 6, wherein the breather channel is positioned in a portion between the recess and the second face of the fixture body.

8. The device of claim 6, wherein the breather channel includes a first breather portion extending through the breather body, the first breather portion in fluid receiving communication with the breather inlet portion, the first breather portion extending along a breather inlet axis extending substantially perpendicular to the longitudinal axis of the fixture body and a breather axis of the breather inlet portion.

9. The device of claim 8, wherein
(a) breather channel includes a second breather portion is in air and fluid receiving communication with the breather inlet portion, the second breather portion extending in a direction along or substantially parallel to the longitudinal axis of the fixture body, and/or
(b) a first breather body surface of the breather body defines a breather outlet centered on a breather outlet axis substantially perpendicular to the breather inlet axis, the breather outlet in fluid receiving communication with the first breather portion.

10. A kit for analyzing a cylinder bore surface comprising,
a first fixture body and a second fixture body, each of the first fixture body and the second fixture body defining a breather aperture, each of the first fixture body and the second fixture body comprising:
a first face engageable with a surface of an engine cylinder bore, the first face defining a recess, and
a first end comprising a lip that engages with a cylinder block, the first end defining a first end aperture in fluid communication with the recess;
at least one biasing member extending between the first fixture body and the second fixture body, each of the at least one biasing member configured to exert a force on each of the first fixture body and the second fixture body, causing the first face of the first fixture body and the first face of the second fixture body to contact a surface of a cylinder bore when the kit is positioned within the cylinder bore.

11. The kit of claim 10, wherein
(a) each of the at least one biasing member engages with a protrusion on a second face of each of the first fixture body and the second fixture body, and/or
(b) each of the at least one biasing member comprises an extendable bar that is locked into place between the first fixture body and the second fixture body.

12. A method of monitoring an engine surface, the method comprising:
fixing a device to an engine cylinder bore such that a first face of the device is in contact with a surface of an engine cylinder bore, the first face defining a recess;
providing a replication material to the recess such that the replication material contacts the surface of the engine cylinder bore, the replication material configured to cure after an amount of time has elapsed;
removing the device including the cured replication material from the engine cylinder bore; and
analyzing the cured replication material.

13. The method of claim 12, wherein fixing the device to the engine cylinder bore comprises engaging a lip of a fixture body of the device with an end of a cylinder block defining the engine cylinder bore, thereby facilitating positioning of the fixture body within the engine cylinder bore.

14. The method of claim 12, wherein the replication material is provided to the recess via a first end aperture defined in a fixture body of the device.

15. The method of claim 14, further comprising flowing excess replication material out of the device via a breather aperture defined in the fixture body.
